# EUROPEAN PATENT SPECIFICATION

(11) **EP 2 055 194 B1**
(45) Date of publication and mention of the grant of the patent: **12.01.2011**
(21) Application number: 07254274.9
(22) Date of filing: 29.10.2007
(51) Int. Cl.: A23D 9/00, A21D 2/16, A23L 1/30

(54) **Dough composition**
Teigzusammensetzung
Composition à base de pâte

(43) Date of publication of application: 06.05.2009
(73) Proprietor: Lipid Nutrition B.V., 1521 AZ Wormerveer (NL)
(72) Inventor: Mulder, Ellen Maria Elizabeth, 1521 AZ Wormerveer (NL); Van Wanroij, Miriam Aldegonda Josephina, 1521 AZ Wormerveer (NL); Schmid, Ulrike, 1521 AZ Wormerveer (NL)
(74) Representative: Probert, Gareth David

(56) References cited:
- EP-A- 1 006 806
- WO-A-2006/082093
- US-A- 6 034 132
- US-B1- 6 468 556
- US-B2- 6 756 405

## Description

This invention relates to a dough composition and to a method for its production.

The nutritional value of the diet has come under increasing scrutiny. Food supplements are often taken by individuals in order to obtain nutritional benefits. However, food supplements are typically in the form of capsules or the like and have the disadvantage that they are inconvenient in that an individual has to remember to take them. Food supplements of this type are typically not flavoured and are not attractive to many consumers.

Nutritional supplements have been incorporated into food products but the resulting food products can have an undesirable taste and the incorporation, of the supplement can have a deleterious effect on the stability, of the products. Conjugate linoleic acid (CLA) is a conjugated dienoic fatty acid having 18 carbon atoms. As a result of the presence of the two double bonds in CLA, geometrical isomerism is possible and the CLA molecule or moiety may exist in a number of isomeric forms. The cis9, tans11 ("c9t11") and trans10, cis12 ("t10c12") isomers of CLA are generally the most abundant and beneficial pharmacological effects have been identified for each of these isomers.

US 6,468,556 disclose the administration of CLA for inhibiting liver fat accumulation. However, this document is not concerned with the stability of its formulations or whether they have an acceptable taste and texture.

JP 2003116449 and JP10127227 disclose the use of fish oil in the preparation of bread.

EP 0 572 051 discloses a liquid improver comprising 75 to 95% by weight vegetable oil having an N₂₀ <2.0 (N₂₀ being the solid fat content as measured by NMR).

There remains a need for dough compositions containing CLA that have good organoleptic properties such as taste and mouthfeel. We have now found dough compositions that solve these problems.

According to one aspect of the present invention, there is provided a dough composition comprising flour, water and a fat phase, wherein the fat phase comprises at least 60% by weight conjugated linoleic acid or a derivative thereof (CLA), and wherein the CLA comprises the c9 t11 and t10 C12 isomers in an amount of at least 55% by weight bared on the total amount of CLA. Preferably, the fat phase comprises at least 80% by weight CLA.

Conveniently, the fat phase comprises at least 95% by weight CLA.

Advantageously, the flour is prepared from whole grain.

Preferably, the dough composition comprises brown flour.

Conveniently, the dough composition comprises white flour.

Advantageously, the dough composition comprises a leavening agent.

Preferably, the leavening agent is yeast.

Conveniently, the flour is a mixture of wheat with other grains.

Advantageously, the dough composition is free of wheat or gluten.

Preferably, the dough composition is sourdough.

Conveniently, the dough composition comprises one or more additives selected from flavours, colouring agents, vitamins, acidity regulators, preservatives, emulsifiers, antioxidants, dietary fibres and mixtures thereof.

Advantageously, the conjugated linoleic acid is incorporated in the dough composition in the form of a powder.

Preferably, the bread comprises a bread improver.

According to another aspect of the invention, there is provided a bread prepared using the dough composition of the invention.

There is disclosed herein a bread improver comprising at least 8% conjugated linoleic acid or a derivative thereof.

The bread improver may comprise ascorbic acid, sodium metabisuphate, ammonium chloride, amylase and/or protease.

According to a further aspect of the invention, there is provided a process for producing a dough composition of the invention which comprises admixing flour, water, and a fat phase, wherein the fat phase comprises at least 60% by weight CLA to form the dough composition, and wherein the CLA comprises the c9 t11 and t10 c12 isomers in an amount of at least 55% based on the total amount of CLA. Preferably, the process further comprises baking the dough composition.

Conveniently, the CLA is incorporated into the dough composition in the form of a powder.

Advantageously, the powder is produced by spray drying CLA or its derivatives, or a fat comprising CLA acid or its derivatives, with protein and/or carbohydrate. According to yet further aspect of the invention, there is provided the use of a dough composition, a bread or a bread improver of the invention for a nutritional benefit.

Preferably, the benefit is a weight management effect.

Conveniently, the benefit is a reduced tendency to fluctuation of body weight.

Advantageously, the benefit is related to the prevention or treatment of atherosclerosis.

According to another aspect of the invention, there is provided a dough composition comprising flour and a fat phase, wherein the fat phase comprises a fat A and a fat B, wherein fat A comprises at least 90% by weight conjugated linoleic acid or a derivative thereof (CLA), wherein the CLA comprises the c9t11 and t10c12 isomers in an amount of at least 55% by weight based on the total amount of CLA, and wherein fat B has an N₂₀-value greater than about 10.

Preferably, fat B has an N₂₀-value greater than about 20.

Conveniently, fat B has an N₂₀-value in the range of from about 30 to about 80.

Advantageously, the fat phase comprises a blend of fat A and fat B.

Preferably, fat A comprises at least 95% by weight CLA.

Conveniently, fat B is selected from the group consisting of butter, cocoa butter equivalents, cocoa butter, palm oil or fractions thereof, palm kernel oil or fractions thereof, interesterified mixtures of above fats or fractions or hardened components thereof, and from liquid oils, such as sunflower oil, high oleic sunflower oil, olive oil, soybean oil, rapeseed oil, cottonseed oil, safflower oil, high oleic safflower oil, maize only and/or MCT oils and mixtures thereof. Advantageously, the dough composition comprises flour which is prepared from whole grain.

Preferably, the dough composition comprises brown flour.

Conveniently, the dough composition comprises white flour.

Advantageously, the flour is a mixture of wheat with other grains.

Preferably, the dough composition is free of wheat or gluten.

Conveniently, the dough composition is sourdough.

Advantageously, the dough composition comprises one or more additives selected from flavours, colouring agents, vitamins, acidity regulators, preservatives, emulsifiers, antioxidants, dietary fibres and mixtures thereof.

Preferably, the CLA is incorporated in the dough composition in the form of a powder.

According to another aspect of the invention, there is provided a biscuit prepared using the dough composition of the invention.

According to a further aspect of the invention, there is provided a cake prepared using the dough composition of the invention.

According to yet another aspect of the invention, there is provided puff pastry prepared using the dough composition of the invention.

According to a yet further aspect of the invention, there is provided a process for producing a dough composition of the invention which comprises admixing flour and a fat phase which comprises a fat A and a fat B, wherein fat A comprises at least 90% by weight conjugated linoleic acid or a derivative thereof (CLA), and wherein the CLA comprises the c9t11 and t10c12 isomers in an amount, of at least 55% based on the total amount of CLA, and wherein fat B has an N₂₀ value greater than about 10, to form the dough composition.

Preferably, the process further comprises baking the dough composition.

Conveniently, the CLA is incorporated into the dough composition in the form of a powder.

Advantageously, the powder is produced by spray drying CLA, or a fat comprising CLA, with protein and/or carbohydrate.

Preferably, the process further comprises the step of mixing together fat A with fat B to give the fat phase before the fat phase is admixed with the flour.

Conveniently, the process comprises the steps of adding fat A and fat B to the flour separately.

According to another aspect of the invention, there is provided a use of a dough composition, a biscuit, a cake or puff pastry of the invention for a nutritional benefit.

Preferably, the benefit is a weight management effect.

Conveniently, the benefit is a reduced tendency to fluctuation of body weight.

Advantageously, the benefit is related to the prevention or treatment of atherosclerosis.

Dough compositions of the invention optionally comprise one or more additional additives selected from flavours, colouring agents, vitamins, minerals, acidity regulators, preservatives, emulsifiers, antioxidants, dietary fibres and mixtures thereof. Bach of these materials may be a single component or a mixture of two or more components.

Examples of suitable vitamins and minerals include calcium, iron, zinc, copper, phosphorous, biotin, folic acid, pantothenic acid, iodine, vitamin A, vitamin C, vitamin B1, vitamin B2, vitamin B3, vitamin B6, vitamin B9, vitamin B12, vitamin D, vitamin E, and vitamin K. Preferably, when a vitamin or mineral is utilized the vitamin or mineral is selected from iron, zinc, folic acid, iodine, vitamin A, vitamin C, vitamin B2, vitamin B3, vitamin B6, vitamin B12, vitamin D, and vitamin E.

Acidity regulators include organic as well as inorganic edible acids. The acids can be added or be present in their undissociated form or, alternatively, as their respective salts, for example, potassium or sodium hydrogen phosphate, potassium or sodium dihydrogen phosphate salts. The preferred acids are edible organic acids which include citric acid, malic acid, fumaric acid, adipic acid, phosphoric acid, gluconic acid, tartaric acid, ascorbic acid, acetic acid, phosphoric acid, or mixtures thereof. Glucono Delta Lactone (GDL) may also be used, particularly
wherein it is desired to reduce pH without introducing excessive acidic, or tart, flavour in the final composition.

Colouring agents including natural and artificial colours may optionally be used.
Non-limiting examples of colouring agents include fruit and vegetable juices, riboflavin, carotenoids (e.g. p-carotene), turmeric, and lycopenes.

Dietary fibres are complex carbohydrates resistant to digestion by mammalian enzymes, such as the carbohydrates found in plant cell walls and seaweed, and those produced by microbial fermentation.

Preservatives may be selected from the group consisting of sorbate preservatives, benzoate preservatives, and mixtures thereof.

Antioxidants include, for example, natural or synthetic tocopherols, TBHQ, BHT, BHA, free radical scavengers, propylgallate, ascorbylesters of fatty acids and enzymes with anti-oxidant properties.

As used herein, the foam 'liquid oil' refers to a fat that is liquid at room temperature, i.e. at about 25°C. Examples of liquid oils include vegetable oils such as extra virgin olive oil, virgin olive oil, native olive oil and peanut oil.

The fat in the dough composition of the invention comprises at least 60% by weight of the fat phase of conjugated linoleic acid (CLA) or a derivative thereof. Preferably, at least 70%, at least 80% or at least 90% by weight of the fat phase is conjugated linoleic acid (CLA) or a derivative thereof. The upper limit of CLA in the fat phase may be 95% or 100% by weight. The amount of CLA in the fat is based on the total weight of fatty acids in the fat (calculated using fatty acid methyl ester analysis). The term "CLA", as used herein refers to conjugated linoleic acid and its derivatives. The CLA may be used in the form of the free acid.

Derivatives of conjugated fatty acids include salts and esters thereof, or a mixture of two or more of these materials. Salts are non-toxic, pharmaceutically acceptable and/or acceptable for use in food products and/or pharmaceuticals and include, for example, salts with alkali metals and alkaline earth metals such as sodium, calcium and magnesium, preferably sodium. Esters include, for example, mono-, di- and tri- glycerides and mixtures thereof, and C₁ to C₆ alkyl esters (where the alkyl group can be straight chain or branched), as well as esters formed with alcohols that are acceptable in food products or pharmaceutical products, such as are disclosed in EP-A-1167340. . Suitable alcohols include terpene alcohols or sesquiterpene alcohols, for example menthol, isopulegol, menthenol, carveol, carvomenthenol, carvomenthol, isobornylalcohol, caryophyllenealcohol, geraniol, farnesol and citronellol.

The preferred form of CLA for use in the invention is as a glyceride. Particularly preferred are diglycerides and triglycerides, with triglycerides being even more preferred.

The CLA comprises a mixture of two or more different isomers including: cis, cis; cis, trans; trans, cis; and trans, trans isomers. Preferred isomers are the trans10, cis12 and cis9, trans 11 isomers (also referred to herein as t10c12 and c9t11, respectively), including mixtures with each other and mixtures with other isomers. More preferably, the conjugated linoleic acid or derivative thereof comprises trans10, cis12 and cis9, trans11 isomers and the weight ratio of trans10, cis12 isomer to cis9, trans11 isomer or *vice versa* is at least 1.2:1, such as 1.3:1, even more preferably at least 1.5:1, e.g., in the range 1.5:1 to 100:1 or 1.5:1 to 10:1, such as a 60:40 or 80:20 mixture of the trans10, cis12: cis9, trans11 isomers. The compositions comprise the trans10, cis 12 isomer or the cis9, trans 11 isomer as the major isomer component i.e., present in an amount of at least 55 %, preferably at least 60 %, more preferably at least 70 %, even more preferably at least 75 %, most preferably at least 80 %, such as at least 90 % or even 100 % by weight based on the total amount of conjugated linoleic acid. The CLA comprises the c9t11 and t10c12 isomers and the weight ratio of the c9t11 to t10c12 isomers may be from 99:1 to 1 to 99, preferably from 90:10 to 10:90 most preferably from 80:20 to 20:80.

CLA can be produced in conventional ways. For example, CLA can be produced by known methods, such as that described in EP-A-902082/ . CLA products that are enriched in one or more isomers are disclosed in WO 97/18320 .

The CLA is optionally blended with additional fatty acids or glycerides before being used in the fat of the present invention. When the compositions contain one or more fatty acids and/or glycerides in addition to the CLA, the additional fatty acid(s) and/or glycerides are preferably selected from liquid oils, such as soybean oil, sunflower oil, olive oil, rape seed oil and cotton seed oil; cocoa butter and cocoa butter equivalents; palm oil and fractions thereof; enzymically made fats; fish oils and fractions thereof; gamma linolenic acid and enriched mixtures thereof; hardened liquid oils; and mixtures thereof; oleic acid, taxoleic, pinolenic acid,, saturated fatty acids, arachidonic acid and EPA (eicosapentaenoic) and DHA (docosahexaenoic). These other fatty acids may be present as free acids or derivatives in the same way as CLA and are preferably present as glycerides, more preferably triglycerides.

The CLA can be included in the dough of the invention as an oil or in the form of a powder, such as a free lowing powder. CLA and its derivatives in powder form can be produced, for example, by spray drying CLA, or a fat comprising CLA, with protein and/or carbohydrate, with the powder typically comprising from 50 to 95% by weight of fat. A preferred powder comprises 70 to 90% by weight triglyceride of which at least 70% by weight is CLA. It has been found that use of the powder can give extra stability to the dough. Preferably, the powder comprises at least 80% by weight, more preferably at least 90% by weight, most preferably at least 95% by weight CLA or a derivative thereof.

The dough composition of the invention can be used to prepare products having advantageous properties, the dough can be cooked in a known manner, such as baking and frying to give various cooked goods such as bread, biscuits (also referred to as cookies), cakes and puff pastry. The cooked goods have improved characteristics, such as softness, crispness and crunchiness. The cooked goods may also slice well when cut with a knife. The goods may also have good organoleptic characteristics, such as easily dissolving in the mouth without being too dry or damp, and breaking easily (snap). Other advantageous properties include good volume, brittleness, firmness, crispiness and compacity.

The invention may have the beneficial property of preventing the dough and the cooked goods from drying too quickly. The cooked goods also have good crust properties without being too crumbly or crispy.

The use of conjugated linoleic acid or a derivative there of (CLA) also avoids problems of stability encountered with other fats, such as fish oil. The dough compositions of the invention, and goods prepared therefrom exhibit good flavour and taste characteristics. Also, the goods prepared in accordance with the invention have good health effects, for example in weight management and heart health

Also, CLA unexpectedly performs better than other unsaturated oils such as linoleic rich oils, particularly in aspects such as stability during processing and baking, and in terms of good taste and mouthfeel of baked goods. Fats containing at least 80% by weight CLA have these beneficial properties, and fats containing at least 95% by weight CLA also exhibit improved properties.

Also, the dough compositions themselves have improved characteristics, such as in terms of consistency, elasticity and aeration properties. The compositions of the invention provide significant advantages in terms of weight management. The compositions have good taste and also good stability, both in their preparation and storage. Also, the compositions of the invention can offer improved nutritional balance and are easy to use. The compositions in the invention can offer a consumer a nutritional benefit in terms of weight management in particular a reduced tendency to fluctuation of body weight and to prevent atherosclerosis.
The listing or discussion of an apparently prior-published document in this specification should not necessarily be taken as an acknowledgement that the document is part of the state of the art or is common general knowledge.

The following non limiting examples illustrate the invention and do not limit its scope in any way. In the example and throughout this specification, all percentages, parts and ratios are by weight unless indicated otherwise.

The physical properties of fats can be defined in terms of an N value. This value indicates the percentage of solid fat in a composition at a certain temperature. Thus, the term Nₓ refers to solid fat content at a temperature of x°C, measured by NMR pulse techniques on unstabilised fats. The term 'unstabilised' refers to a fat that is melted at 80°C, kept at 60°C for 5 minutes, cooled to °C, kept at °C for 1 hour and then kept at the measurement temperature x°C for 30 minutes before analysis.

### Example 1

**Bread example with Clarinol**

| **% by weight** | **Ingredient** |
|---|---|
| 37 | Wholemeal flour |
| 16 | Multi-grain mix |
| 3.1 | Clarinol™ G-80 (80% conjugated linoleic acid) |
| 2.2 | Gluten powder |
| 1.6 | Bread improver |
| 1.6 | Yeast |
| 1.1 | Salt |
| 37.4 | Water till 100% |

The multi-grain mix was soaked in water (27% on flour) for at least 20 minutes. Then all the ingredients were mixed with water (36% on flour), spiral kneaded 3 minutes slow and 3 minutes fast. The rest of water was added (7% on flour) and mixed 1 minute slow and 5 minutes fast. The dough was scaled, formed and leavened for 45 minutes. The dough was formed to long shape and put in baking tin. The loaf was leavened for another 70 minutes. The baking took place at 250/220°C for 30 minutes.

### Example_2

**Bread patent example with Clarinol G-95**

| **% by weight** | **Ingredient** |
|---|---|
| 37 | Wholemeal flour |
| 16 | Multi-grain mix |
| 3.1 | Clarinol™ G-95 (95% conjugated linoleic acid) |
| 2.2 | Gluten powder |
| 1.6 | Bread improver |
| 1.6 | Yeast |
| 1.1 | Salt |
| 37.4 | Water till 100% |

The multi-grain mix is soaked in water (27% on flour) for at least 30 minutes. Then all the ingredients are mixed with water (36% on flour), spiral kneaded 3 minutes slow and 3 minutes fast. The rest of water is added (7% on flour) and mixed 1 minute slow and 5 minutes fast. The dough is scaled, formed and leavened for 45 minutes. The dough is formed to long shape and put in baking tin. The loaf is leavened for another 70 minutes. The baking takes place at 250/220°C for 30 minutes.

### Example 3

**WHOLEMEAL COOKIES WITH CLARINOL™**

| **% by weight** | **Ingredient** |
|---|---|
| 38.8 | Whole wheat flour |
| 20.0 | Flour |
| 20.0 | Butter |
| 17.7 | Eggs |
| 3.5 | Clarinol™ G-95 (95% conjugated linoleic acid) |

Clarinol™ is weighed and mixed with the flour. All other ingredients are added and mixed in mixer to form a sweet short pastry. Then the pastry is cooled to 4°C/39°F. The pastry is rolled out to a thickness of 5-6mm. Pieces are cut out and brushed with egg yolk. The cookies are baked at 180°C/356°F for 15 minutes (fan oven). The wholemeal cookies are packed in polypropylene bags.

### CLARINOL G-80

Clarinol™ G-80 is an oil high in isomers of Conjugated Linoleic Acid (CLA), mainly in triglyceride form. The two main isomers present are cis-9, trans-11 (c9,t11) and trans-10,cis-12 (t10,c12) CLA, in a 50:50 ratio. Clarinol™ G-80 is made from natural safflower oil by a gentle, proprietary process.

**Technical Characteristics (typical values)**

| | |
|---|---|
| Free fatty acid as % oleic acid : | 0.7 |
| Peroxide value meq 02/kg: | 0.2 |
| Total CLA % : | 80 |
| c9,t11 + t10,c12 isomers %: | 74.5 |
| Trans fatty acids % : | 0.8 |
| Total saturated fatty acids %: | 7 |

### CLARINOL G-95

Product Description Clarinol™ G-95 is an oil high in isomers of Conjugated Linoleic Acid (CLA). The two main isomers present are cis-9, trans-11 (c9,t11) and trans-10,cis-12 (t10,c12) CLA, in a 50:50 ratio. Clarinol™ G-95 is made from natural safflower oil by a gentle,proprietary process.

**Technical Characteristics (typical values)**

| | |
|---|---|
| Free fatty acid as % oleic acid : | 0.7 |
| Peroxide value meq 02/kg : | 03 |
| Total CLA % : | 93 |
| c9,t11 +t10,c12 isomers % : | 89 |
| Trans fatty acids % : | 0.8 |
| Total saturated fatty acids % : | 0.5 |

## Claims

1. A dough composition comprising flour, water and a fat phase, wherein the fat phase comprises at least 60% by weight conjugated linoleic acid or a derivative thereof (CLA), and wherein the CLA comprises the c9t11 and t10c12 isomers in an amount of at least 55% by weight based on the total amount of CLA.

2. A dough composition according to Claim 1, wherein the fat phase comprises at least 80% by weight CLA.

3. A dough composition according to Claim 1 or 2, wherein the fat phase comprises at least 95% by weight CLA.

4. A dough composition according to any of the preceding claims, wherein the flour is prepared from whole grain.

5. A dough composition according to any preceding claim, wherein the dough composition comprises brown flour.

6. A dough composition according to any preceding claim, wherein the dough composition comprises white flour.

7. A dough composition according to any of the preceding claims, which comprises a leavening agent.

8. A dough composition according to Claim 7, wherein the leavening agent is yeast.

9. A dough composition according to any of the preceding claims, wherein the flour is a mixture of wheat with other grains.

10. A dough composition according to in any of Claims 1 to 8, which is free of wheat or gluten.

11. A dough composition according to any preceding claim, which is sourdough.

12. A dough composition according to any of the preceding claims comprising one or more additives selected from flavours, colouring agents, vitamins, acidity regulators, preservatives, emulsifiers, antioxidants, dietary fibres and mixtures thereof.

13. A dough composition according to any of the preceding claims, wherein the CLA. is incorporated in the dough composition in the form of a powder.

14. A dough composition according to any of the preceding claims further comprising a bread improver.

15. A bread prepared using the dough composition according to any of the preceding claims.

16. A process for producing a dough composition as defined in any of Claims 1 to 14 which comprises admixing flour, water and a fat phase, wherein the fat phase comprises at least 60% by weight CLA and wherein the CLA comprises the c9t11 and t10c12 isomers in an amount of at least 55% by weight based on the total amount of CLA, to form the dough composition.

17. A process according to Claim 16, further comprising baking the dough composition.

18. A process according to Claim 16 or 17, wherein the CLA is incorporated into the dough composition in the form of a powder.

19. A process according to Claim 18, wherein the powder is produced by spray drying CLA, or a fat comprising CLA, with protein and/or carbohydrate.

20. Use of a dough composition according to any of Claims 1 to 14, on a bread according to Claim 15 for the preparation of a composition for a nutritional benefit.

21. Use as claimed in Claim 20, wherein the benefit is a weight management effect.

22. Use as claimed in Claim 20 or 21, wherein the benefit is a reduced tendency to fluctuation of body weight.

23. Use as claimed in Claim 20, wherein the benefit is related to the prevention or treatment of atherosclerosis.

24. A dough composition comprising flour and a fat phase, wherein the fat phase comprises a fat A and a fat B, wherein fat A comprises at least 90% by weight conjugated linoleic acid or a derivative thereof (CLA), wherein the CLA comprises the c9t11 and t10c12 isomers in an amount of at least 55% by weight based on the total amount of CLA, and wherein fat B has an N₂₀-value greater than about 10.

25. A dough composition according to Claim 24, wherein fat B has an N₂₀-value greater than about 20.

26. A dough composition according to Claim 24 or 25, wherein fat B has an 30 N₂₀-value in the range of from about 30 to about 80.

27. A dough composition according to any of Claims 24 to 26, wherein the fat phase comprises a blend of fat A and fat B.

28. A dough composition according to any of Claims 24 to 27 wherein fat A comprises at least 95% by weight CLA.

29. A dough composition according to any of Claims 24 to 28, wherein fat B is selected from the group consisting of butter, cocoa butter equivalents, cocoa butter, palm oil or fractions thereof, palm kernel oil or fractions thereof, interesterified mixtures of above fats or fractions or hardened components thereof, or and from liquid oils, such as sunflower oil, high oleic sunflower oil, olive oil, soybean oil, rapeseed oil, cottonseed oil, safflower oil, high oleic safflower oil, maize only and/or MCT oils and mixtures thereof.

30. A dough composition according to any of Claims 24 to 29, wherein the dough composition comprises flour which is prepared from whole grain.

31. A dough composition according to any of Claims 24 to 30, wherein the dough composition comprises brown flour.

32. A dough composition according to any of Claims 24 to 31, wherein the dough composition comprises white flour.

33. A dough composition according to any of Claims 24 to 32, wherein the flour is a mixture of wheat with other grains.

34. A dough composition according to any of Claims 24 to 32, which is free of wheat or gluten.

35. A dough composition according to any of Claims 24 to 34, which is sourdough.

36. A dough composition according to any of Claims 24 to 35 comprising one or more additives selected from flavours, colouring agents, vitamins, acidity regulators, preservatives, emulsifiers, antioxidants, dietary fibres and mixtures thereof.

37. A dough composition according to any of Claims 24 to 36, wherein the CLA is incorporated in the dough composition in the form of a powder.

38. A biscuit prepared using the dough composition according to any of Claims 24 to 37.

39. A cake prepared using the dough composition according to any of Claims 24 to 37.

40. Puff pastry prepared using the dough composition according to any of Claims 24 to 37.

41. process for producing a dough composition according to any of Claims 24 to 37 which comprises admixing flour and a fat phase which comprises a fat A and a fat B, wherein fat A comprises at least 90% by weight conjugated linoleic acid or a derivative thereof (CLA) wherein the CLA comprises c9t11 and t10c12 isomers in an amount of at least 55% based on the total amount of CLA, and wherein fat B has an N₂₀ value greater than about 10, to form the dough composition.

42. A process according to Claim 41, further comprising baking the dough composition.

43. A process according to Claim 41 or 42, wherein the CLA is incorporated into the dough composition in the form of a powder.

44. A process according to Claim 43, wherein the powder is produced by spray drying CLA, or a fat comprising CLA, with protein and/or carbohydrate.

45. A process according to any of Claims 41 to 44, which further comprises the step of mixing together fat A with fat B to give the fat phase before the fat phase is admixed with the flour.

46. A process according to any of Claims 41 to 44, which comprises the steps of adding fat A and fat B to the flour separately.

47. Use of a dough composition according to any of Claims 24 to 37, a biscuit according to Claim 38, a cake according to Claim 39 or puff pastry according to 10 Claim 40 for the preparation of a composition for a nutritional benefit.

48. Use as claimed in Claim 47, wherein the benefit is a weight management effect.

49. Use as claimed in Claim 47 or 48, wherein the benefit is a reduced tendency to fluctuation of body weight.

50. Use as claimed in Claim 47, wherein the benefit is related to the prevention or treatment of atherosclerosis.

## Patentansprüche

1. Teigzusammensetzung mit Mehl, Wasser und einer Fettphase, wobei die Fettphase mindestens 60 Gewichtsprozent konjugierte Linolsäure oder ein Derivat davon (CLA) aufweist, und wobei die CLA die c9t11- und t10c12-lsomere in einer Menge von mindestens 55 Gewichtsprozent bezogen auf die Gesamtmenge an CLA aufweist.

2. Teigzusammensetzung nach Anspruch 1, wobei die Fettphase mindestens 80 Gewichtsprozent CLA aufweist.

3. Teigzusammensetzung nach Anspruch 1 oder 2, wobei die Fettphase mindestens 95 Gewichtsprozent CLA aufweist.

4. Teigzusammensetzung nach einem der vorangehenden Ansprüche, wobei das Mehl aus vollem Korn hergestellt ist.

5. Teigzusammensetzung nach einem der vorangehenden Ansprüche, wobei die Teigzusammensetzung braunes Mehl aufweist.

6. Teigzusammensetzung nach einem der vorangehenden Ansprüche, wobei die Teigzusammensetzung weißes Mehl aufweist.

7. Teigzusammensetzung nach einem der vorangehenden Ansprüche, die ein Gärmittel aufweist.

8. Teigzusammensetzung nach Anspruch 7, wobei das Gärmittel Hefe ist.

9. Teigzusammensetzung nach einem der vorangehenden Ansprüche, wobei das Mehl eine Mischung aus Weizen mit anderen Getreidearten ist.

10. Teigzusammensetzung nach einem der Ansprüche 1 bis 8, die frei von Weizen und Gluten ist.

11. Teigzusammensetzung nach einem der vorangehenden Ansprüche, die Sauerteig ist.

12. Teigzusammensetzung nach einem der vorangehenden Ansprüche, die einen oder mehrere Zusatzstoffe aufweist ausgewählt aus Geschmacksstoffen, Farbstoffen, Vitaminen, Säureregulatoren, Konservierungsmitteln, Antioxidationsmitteln, Nahrungsmittelfasern und Mischungen davon.

13. Teigzusammensetzung nach einem der vorangehenden Ansprüche, wobei die CLA in die Teigzusammensetzung in Form eines Pulvers eingearbeitet ist.

14. Teigzusammensetzung nach einem der vorangehenden Ansprüche, die weiterhin ein Backhilfsmittel aufweist.

15. Brot hergestellt unter Verwendung der Teigzusammensetzung nach einem der vorangehenden Ansprüche.

16. Prozess zum Herstellen einer Teigzusammensetzung, wie sie in einem der Ansprüche 1 bis 14 definiert ist, der das Vermischen von Mehl, Wasser und einer Fettphase, um die Teigzusammensetzung auszubilden, aufweist, wobei die Fettphase mindestens 60 Gewichtsprozent CLA aufweist und wobei die CLA die c9t11- und t10c12-Isomere in einer Menge von mindestens 55 Gewichtsprozent bezogen auf die Gesamtmenge an CLA aufweist.

17. Prozess nach Anspruch 16, der weiterhin das Backen der Teigzusammensetzung aufweist.

18. Prozess nach Anspruch 16 oder 17, wobei die CLA in die Teigzusammensetzung in Form eines Pulvers eingearbeitet wird.

19. Prozess nach Anspruch 18, wobei das Pulver durch Sprühtrocknen von CLA oder eines CLA aufweisenden Fetts mit Proteinen und/oder Kohlenhydraten hergestellt wird.

20. Verwendung einer Teigzusammensetzung nach einem der Ansprüche 1 bis 14 oder eines Brots nach Anspruch 15 für die Herstellung einer Zusammensetzung zu einem Ernährungsnutzen.

21. Verwendung wie in Anspruch 20 beansprucht, wobei der Nutzen ein Gewichtsmanagementeffekt ist.

22. Verwendung wie in Anspruch 20 oder 21 beansprucht, wobei der Nutzen eine reduzierte Tendenz zu Schwankungen des Körpergewichts ist.

23. Verwendung wie in Anspruch 20 beansprucht, wobei sich der Nutzen auf die Verhinderung oder Behandlung von Atherosklerose bezieht.

24. Teigzusammensetzung, die Mehl und eine Fettphase aufweist, wobei die Fettphase ein Fett A und ein Fett B aufweist, wobei das Fett A mindestens 90 Gewichtsprozent konjugierte Linolsäure oder ein Derivat davon (CLA) aufweist, wobei die CLA die c9t11- und t10c12-Isomere in einer Menge von mindestens 55 Gewichtsprozent bezogen auf die Gesamtmenge an CLA aufweist, und wobei Fett B einen N₂₀-Wert größer als ungefähr 10 hat.

25. Teigzusammensetzung nach Anspruch 24, wobei das Fett B einen N₂₀-Wert größer als ungefähr 20 hat.

26. Teigzusammensetzung nach Anspruch 24 oder 25, wobei die Fettphase einen N₂₀-Wert in dem Bereich von ungefähr 30 bis ungefähr 80 hat.

27. Teigzusammensetzung nach einem der Ansprüche 24 bis 26, wobei die Fettphase eine Mischung von Fett A und Fett B aufweist.

28. Teigzusammensetzung nach einem der Ansprüche 24 bis 27, wobei Fett A mindestens 95 Gewichtsprozent CLA aufweist.

29. Teigzusammensetzung nach einem der Ansprüche 24 bis 28, wobei Fett B aus der Gruppe ausgewählt ist, die besteht aus Butter, Kakaobutteräquivalenten, Kakaobutter, Palmöl oder Fraktionen davon, Palmkernöl oder Fraktionen davon, veresterten Mischungen der obigen Fette oder Fraktionen oder gehärtete Komponenten davon, und/oder aus flüssigen Ölen, so wie Sonnenblumenöl, hoch Oleinsäure-haltigem Sonnenblumenöl, Olivenöl, Sojaöl, Rapsöl, Baumwollsaatöl, Färberdistelöl, hoch Oleinsäure-haltigem Färberdistelöl, Maisöl und/oder Ölen mit mittelkettigen Triglyceriden und Mischungen davon.

30. Teigzusammensetzung nach einem der Ansprüche 24 bis 29, wobei die Teigzusammensetzung Mehl aufweist, das aus vollem Korn hergestellt ist.

31. Teigzusammensetzung nach einem der Ansprüche 24 bis 30, wobei die Teigzusammensetzung braunes Mehl aufweist.

32. Teigzusammensetzung nach einem der Ansprüche 24 bis 31, wobei die Teigzusammensetzung weißes Mehl aufweist.

33. Teigzusammensetzung nach einem der Ansprüche 24 bis 32, wobei das Mehl eine Mischung aus Weizen mit anderen Getreidearten ist.

34. Teigzusammensetzung nach einem der Ansprüche 24 bis 32, die frei von Weizen oder Gluten ist.

35. Teigzusammensetzung nach einem der Ansprüche 24 bis 34, die Sauerteig ist.

36. Teigzusammensetzung nach einem der Ansprüche 24 bis 35, die einen oder mehrere Zusatzstoffe aufweist ausgewählt aus Geschmacksstoffen, Farbstoffen, Vitaminen, Säureregulatoren, Konservierungsmitteln, Emulgiermitteln, Antioxidationsmitteln, Nahrungsmittelfasern und Mischungen davon.

37. Teigzusammensetzung nach einem der Ansprüche 24 bis 36, wobei die CLA in die Teigzusammensetzung in Form eines Pulvers eingearbeitet ist.

38. Keks hergestellt unter Verwendung der Teigzusammensetzung nach einem der Ansprüche 24 bis 37.

39. Kuchen hergestellt unter Verwendung der Teigzusammensetzung nach einem der Ansprüche 24 bis 37.

40. Blätterteig hergestellt unter Verwendung der Teigzusammensetzung nach einem der Ansprüche 24 bis 37.

41. Prozess zur Herstellung einer Teigzusammensetzung nach einem der Ansprüche 24 bis 37, der das Vermischen von Mehl und einer Fettphase, die ein Fett A und ein Fett B aufweist, um die Teigzusammensetzung auszubilden, aufweist, wobei Fett A mindestens 90 Gewichtsprozent konjugierte Linolsäure oder ein Derivat davon (CLA) aufweist, wobei die CLA die c9t11- und t10c12-Isomere in einer Menge von mindestens 55 % bezogen auf die Gesamtmenge an CLA aufweist und wobei Fett B einen N₂₀-Wert größer als ungefähr 10 aufweist.

42. Prozess nach Anspruch 41, der das Backen der Teigzusammensetzung aufweist.

43. Prozess nach Anspruch 41 oder 42, wobei die CLA in die Teigzusammensetzung in Form eines Pulvers eingearbeitet wird.

44. Prozess nach Anspruch 43, wobei das Pulver durch Sprühtrocknen von CLA oder eines CLA aufweisenden Fetts mit Proteinen und/oder Kohlenhydraten hergestellt wird.

45. Prozess nach einem der Ansprüche 41 bis 44, der weiterhin den Schritt des Vermischens von Fett A mit Fett B aufweist, um eine Fettphase zu ergeben, bevor die Fettphase mit dem Mehl vermischt wird.

46. Prozess nach einem der Ansprüche 41 bis 44, der die Schritte des getrennten Zugebens von Fett A und Fett B zu dem Mehl aufweist.

47. Verwendung einer Teigzusammensetzung nach einem der Ansprüche 24 bis 37, eines Keks nach Anspruch 38, eines Kuchens nach Anspruch 39 oder eines Blätterteigs nach Anspruch 40 für die Herstellung einer Zusammensetzung zu einem Nahrungsmittelnutzen.

48. Verwendung wie in Anspruch 47 beansprucht, wobei der Nutzen ein Gewichtsmanagementeffekt ist.

49. Verwendung wie in Anspruch 47 oder 48 beansprucht, wobei der Nutzen eine reduzierte Tendenz zu Schwankungen des Körpergewichts ist.

50. Verwendung wie in Anspruch 47 beansprucht, wobei der Nutzen sich auf die Verhinderung oder Behandlung von Atherosklerose bezieht.

## Revendications

1. Composition de pâte comprenant de la farine, de l'eau et une phase de matière grasse, dans laquelle la phase de matière grasse comprend au moins 60 % en poids d'acide linoléique conjugué ou d'un dérivé de celui-ci (ALC), et dans laquelle l'ALC comprend les isomères c9t11 et t10c12 en une quantité d'au moins 55 % en poids par rapport à la quantité totale d'ALC.

2. Composition de pâte selon la revendication 1, dans laquelle la phase de matière grasse comprend au moins 80 % en poids d'ALC.

3. Composition de pâte selon la revendication 1 ou 2, dans laquelle la phase de matière grasse comprend au moins 95 % en poids d'ALC.

4. Composition de pâte selon l'une quelconque des revendications précédentes, dans laquelle la farine est préparée à partir de grain entier.

5. Composition de pâte selon l'une quelconque des revendications précédentes, dans laquelle la composition de pâte comprend de la farine brune.

6. Composition de pâte selon l'une quelconque des revendications précédentes, dans laquelle la composition de pâte comprend de la farine blanche.

7. Composition de pâte selon l'une quelconque des revendications précédentes, qui comprend un agent levant.

8. Composition de pâte selon la revendication 7, dans laquelle l'agent levant est une levure.

9. Composition de pâte selon l'une quelconque des revendications précédentes, dans laquelle la farine est un mélange de blé et d'autres céréales.

10. Composition de pâte selon l'une quelconque des revendications 1 à 8, qui est exempte de blé ou de gluten.

11. Composition de pâte selon l'une quelconque des revendications précédentes, qui est du levain.

12. Composition de pâte selon l'une quelconque des revendications précédentes, comprenant un ou plusieurs additifs choisis parmi les agents de flaveur, les agents colorants, les vitamines, les régulateurs d'acidité, les conservateurs, les émulsifiants, les antioxydants, les fibres diététiques et des mélanges de ceux-ci.

13. Composition de pâte selon l'une quelconque des revendications précédentes, dans laquelle l'ALC est incorporé dans la composition de pâte sous la forme d'une poudre.

14. Composition de pâte selon l'une quelconque des revendications précédentes, comprenant en outre un améliorant pour le pain.

15. Pain préparé en utilisant la composition de pâte selon l'une quelconque des revendications précédentes.

16. Procédé pour préparer une composition de pâte selon l'une quelconque des revendications 1 à 14, qui comprend le mélange de farine, d'eau et d'une phase de matière grasse, dans lequel la phase de matière grasse comprend au moins 60 % en poids d'ALC, et dans lequel l'ALC comprend les isomères c9t11 et t10c12 en une quantité d'au moins 55 % en poids par rapport à la quantité totale d'ALC, pour former la composition de pâte.

17. Procédé selon la revendication 16, comprenant en outre la cuisson au four de la composition de pâte.

18. Procédé selon la revendication 16 ou 17, dans lequel l'ALC est incorporé dans la composition de pâte sous la forme d'une poudre.

19. Procédé selon la revendication 18, dans lequel la poudre est produite par séchage par atomisation de l'ALC, ou d_{'}une matière grasse comprenant l'ALC, avec une protéine et/ou un glucide.

20. Utilisation d'une composition de pâte selon l'une quelconque des revendications 1 à 14, ou d'un pain selon la revendication 15, pour la préparation d'une composition pour un bénéfice nutritionnel.

21. Utilisation selon la revendication 20, dans laquelle le bénéfice est un effet de gestion du poids.

22. Utilisation selon la revendication 20 ou 21, dans laquelle le bénéfice est une tendance réduite à une fluctuation du poids corporel.

23. Utilisation selon la revendication 20, dans laquelle le bénéfice est lié à la prévention ou au traitement d'une athérosclérose.

24. Composition de pâte comprenant de la farine et une phase de matière grasse, dans laquelle la phase de matière grasse comprend une matière grasse A et une matière grasse B, dans laquelle la matière grasse A comprend au moins 90 % en poids d'acide linoléique conjugué ou d'un dérivé de celui-ci (ALC), dans laquelle l'ALC comprend les isomères c9t11 et t10c12 en une quantité d'au moins 55 % en poids par rapport à la quantité totale d'ALC, et dans laquelle la matière grasse B a une valeur N₂₀ supérieure à environ 10.

25. Composition de pâte selon la revendication 24, dans laquelle la matière grasse B a une valeur N₂₀ supérieure à environ 20.

26. Composition de pâte selon la revendication 24 ou 25, dans laquelle la matière grasse B a une valeur N₂₀ dans la gamme d'environ 30 à environ 80.

27. Composition de pâte selon l'une quelconque des revendications 24 à 26, dans laquelle la phase de matière grasse comprend un mélange de matière grasse A et de matière grasse B.

28. Composition de pâte selon l'une quelconque des revendications 24 à 27, dans laquelle la matière grasse A comprend au moins 95 % en poids d'ALC.

29. Composition de pâte selon l'une quelconque des revendications 24 à 28, dans laquelle la matière grasse B est choisie dans le groupe constitué par le beurre, les équivalents du beurre de cacao, le beurre de cacao, l'huile de palme ou des fractions de celle-ci, l'huile de noyaux de palme ou des fractions de celle-ci, les mélanges interestérifiés des matières grasses précitées ou de fractions ou de constituants durcis de celles-ci, et parmi les huiles liquides, telles que l'huile de tournesol, l'huile de tournesol à haute teneur oléique, l'huile d'olive, l'huile de soja, l'huile de colza, l'huile de coton, l'huile de carthame, l'huile de carthame à haute teneur oléique, les huiles de maïs seulement et/ou TCM et des mélanges de celles-ci.

30. Composition de pâte selon l'une quelconque des revendications 24 à 29, laquelle composition de pâte comprend une farine qui est préparée à partir de grain entier.

31. Composition de pâte selon l'une quelconque des revendications 24 à 30, laquelle composition de pâte comprend de la farine brune.

32. Composition de pâte selon l'une quelconque des revendications 24 à 31, laquelle composition de pâte comprend de la farine blanche.

33. Composition de pâte selon l'une quelconque des revendications 24 à 32, dans laquelle la farine est un mélange de blé et d'autres céréales.

34. Composition de pâte selon l'une quelconque des revendications 24 à 32, qui est exempte de blé ou de gluten.

35. Composition de pâte selon l'une quelconque des revendications 24 à 34, qui est du levain.

36. Composition de pâte selon l'une quelconque des revendications 24 à 35, comprenant un ou plusieurs additifs choisis parmi les agents de flaveur, les agents colorants, les vitamines, les régulateurs d'acidité, les conservateurs, les émulsifiants, les antioxydants, les fibres diététiques et des mélanges de ceux-ci.

37. Composition de pâte selon l'une quelconque des revendications 24 à 36, dans laquelle l'ALC est incorporé dans la composition de pâte sous la forme d'une poudre.

38. Biscuit préparé en utilisant la composition de pâte selon l'une quelconque des revendications 24 à 37.

39. Gâteau préparé en utilisant la composition de pâte selon l'une quelconque des revendications 24 à 37.

40. Pâtisserie feuilletée préparée en utilisant la composition de pâte selon l'une quelconque des revendications 24 à 37.

41. Procédé pour préparer une composition de pâte selon l'une quelconque des revendications 24 à 37, qui comprend le mélange de farine et d'une phase de matière grasse qui comprend une matière grasse A et une matière grasse B, dans lequel la matière grasse A comprend au moins 90% en poids d'acide linoléique conjugué ou d'un dérivé de celui-ci (ALC), dans lequel l'ALC comprend les isomères c9t11 et t10c12 en une quantité d'au moins 55% par rapport à la quantité totale d'ALC, et dans lequel la matière grasse B a une valeur N₂₀ supérieure à environ 10, pour former la composition de pâte.

42. Procédé selon la revendication 41, comprenant en outre la cuisson au four de la composition de pâte.

43. Procédé selon la revendication 41 ou 42, dans lequel l'ALC est incorporé dans la composition de pâte sous la forme d'une poudre.

44. Procédé selon la revendication 43, dans lequel la poudre est produite par séchage par atomisation de l'ALC, ou d'une matière grasse comprenant l'ALC, avec une protéine et/ou un glucide.

45. Procédé selon l'une quelconque des revendications 41 à 44, qui comprend en outre l'étape consistant à mélanger ensemble la matière grasse A avec la matière grasse B pour donner la phase de matière grasse avant de mélanger la phase de matière grasse avec la farine.

46. Procédé selon l'une quelconque des revendications 41 à 44, qui comprend les étapes consistant à ajouter séparément la matière grasse A et la matière grasse B à la farine.

47. Utilisation d'une composition de pâte selon l'une quelconque des revendications 24 à 37, d'un biscuit selon la revendication 38, d'un gâteau selon la revendication 39 ou d'une pâtisserie feuilletée selon la revendication 40 pour la préparation d'une composition pour un bénéfice nutritionnel.

48. Utilisation selon la revendication 47, dans laquelle le bénéfice est un effet de gestion du poids.

49. Utilisation selon la revendication 47 ou 48, dans laquelle le bénéfice est une tendance réduite à une fluctuation du poids corporel.

50. Utilisation selon la revendication 47, dans laquelle le bénéfice est lié à la prévention ou au traitement d'une athérosclérose.
